# EUROPEAN PATENT APPLICATION

(11) **EP 3 354 541 A1**
(43) Date of publication of application: **01.08.2018**
(21) Application number: 17153722.8
(22) Date of filing: 30.01.2017
(51) Int. Cl.: B62D 15/02, G08G 1/16

(54) **DRIVER ASSISTANCE SYSTEM FOR OVERCOMING A BUMP**

(71) Applicant: Continental Automotive GmbH, 30165 Hannover (DE)
(72) Inventor: Pimpalkar, Umesh, 560100 Bangalore (IN)
(74) Representative: Bobbert, Christiana

(57) **Abstract**

The invention relates to a driver assistance system (100) for a vehicle (200) comprising a sensor arrangement (110) configured to acquire geometrical information of a bump (250) on a road and a control device (120). The control device (120) is configured to calculate, based on an analysis of the geometrical information of the bump (250), a trajectory for the vehicle (200), such that a first front wheel of the vehicle (200) touches the bump (250) before a second front wheel of the vehicle (200) touches the bump (250), such that a bottom of the vehicle (200) does not touch the bump (250), when the vehicle (250) moves over the bump (250).

## Description

The invention relates to a driver assistance system for overcoming a bump, a vehicle comprising the driver assistance system, a method, a program element, and a computer-readable medium.

Since the beginning of the development of motor vehicles, comfort of the passengers is an important criterion. Some important milestones thereof are the air suspension, the parking assist and the cruise control. Especially in the last 10 years, numerous other active comfort functions for vehicles have been developed. Bumps do not only impact the comfort of the passengers, but bumps can also cause damage the vehicle itself. Especially, if the bumps are high compared to the ground clearance of the vehicle. Road bumps can be present in the form of recesses, such as potholes and, in the form of humps.

It would be advantageous to reduce vehicle damages caused by bumps.

The object of the present invention is solved with the subject matter of the independent claims, wherein further embodiments are incorporated in the dependent claims.

According to a first aspect, there is provided a driver assistance system for a vehicle, comprising a sensor arrangement configured to acquire geometrical information of a bump on a road and a control device. The control device is configured to calculate, based on an analysis of the geometrical information of the bump, a trajectory of the vehicle, such that a first front wheel of the vehicle touches the bump before a second front wheel of the vehicle touches the bump, such that an underfloor of the vehicle does not touch the bump, when the vehicle moves over the bump.

The driver assistance system can calculate a trajectory for overcoming a bump, such that the underfloor of the vehicle does not touch the bump, and therefore, no damage occurs to the vehicle. A possibility to achieving this may be that the trajectory is not a straight line, i.e. driving over the bump is performed in a diagonal way. Thus, a first front wheel touches the bump before the second front wheel touches the bump. In this scenario it does not matter which of the two front wheels of a vehicle is the first front wheel, i. e. the right or the left wheel. By applying this trajectory, the angle of the grade of the bump along the vehicle trajectory can be reduced and so the bump can be overcome without damaging the vehicle, i.e. the underfloor of the vehicle touching the bump. Further, the angle and the route of the trajectory may depend from the analysis of the geometrical information of the bump itself and can differ for each different bump. Each bump is characterized by its geometrical information, such as length, width, height/depth and gradient. Therefore, a sensor arrangement detects the geometrical information of each bump and a control device calculates the trajectory according to this information. Furthermore, the control device may change the trajectory during driving over a bump, if this is required for avoiding a damage. The higher and steeper the bump, the smaller may be the angle for driving over the bump and the less may be the velocity while driving over the bump.

According to an embodiment of the invention the control device is configured to calculate the trajectory of the vehicle, based on the analysis of the geometrical information of the bump, such that a first front wheel of the vehicle touches the bump before a second front wheel of the vehicle touches the bump, and wherein a first rear wheel, located at the same side of the vehicle as the first front wheel, leaves the bump as the last wheel.

Another possibility for overcoming the bump may be to cross the bump diagonal and turn while overcoming the bump. Thus, a first front wheel touches the bump before a second front wheel touches the bump and a first rear wheel leaves the bump as the last wheel, wherein the first front wheel and the first rear wheel are located on the same side of the vehicle, i.e. the left or the right side of the vehicle. By turning while overcoming the bump, the driving assistance system can also operate in narrow roads. It should be understood, that it does not matter which wheel of the vehicle is the first wheel and which is the second wheel. The calculated trajectory as well as the turning radius depend from the geometrical information of the bump, which will be acquired by the sensor arrangement.

According to another embodiment of the invention the control device is configured to calculate the trajectory of the vehicle, such that the trajectory of the vehicle leads the vehicle around the bump, if the control device determines from the analysis of the geometrical information of the bump, that the bump is too high for the vehicle to move over it without the underfloor of the vehicle is touching it.

Another possibility for overcoming the bump may be to drive around the bump. This can be advantageous if the result of the analysis of the geometrical information of the bump by the control device comes to the conclusion, that driving over the bump in any trajectory would lead to damages to the vehicle. Thus, the control device calculates a trajectory for the vehicle that leads the vehicle around the bump, if the conditions of the road and the environment allow to drive around.

According to an embodiment of the invention the control device is configured to slow the vehicle down, such that the vehicle moves over the bump without the underfloor of the vehicle is touching the bump.

Besides driving around the bump and driving over the bump with a calculated trajectory, it may also be possible to overcome a bump by slowing down and driving in a straight line over the bump with a reduced velocity. This may depend from the geometrical information of the bump and the control device can acquire and evaluate this information. Thus, the control device decides which of the different possibilities for overcoming the bump may be the advantageous according to the present situation. Normally, slowing down for overcoming a bump is just possible if the bump does not exceed a certain height. The criteria for the decision of the control device may be that the underfloor of the vehicle does not touch the bump, such that the vehicle does not get damaged by the bump.

For detecting the bump on the road a sensor arrangement may be required. This sensor arrangement may comprise a camera, which is capable to take pictures of the road. The control device can analyse these pictures and gains information of the bump ahead. Especially, the control device may determine geometrical information, i.e. height, width, length and gradient of the bump. The sensor arrangement may also comprise other and / or additional sensors like a second camera to form a stereo camera. Further, the sensor arrangement can comprise a radar sensor, a LIDAR sensor and / or an ultrasonic sensor for acquiring geometrical information of the bump. Furthermore, the driver assistance system may use additional sensors of the vehicle for the calculation of the trajectory.

There may be different types of bumps on a road. According to one embodiment the bump may be a hump, i.e. a speed bump, which may intentionally put on the road to reduce the velocity of the vehicles driving on that road. Typically, speed bumps may traverse over the whole driveline of the road and they have a certain height, width and gradient, so that the driver of the vehicle is forced to reduce the velocity of his vehicle to a certain value.

Another possibility of a bump may be a pothole. A pothole can also occur on a road and can lead to damages to the underfloor of a vehicle. Potholes can be detected by the sensor arrangement and the control device can calculate a trajectory to overcome the potholes, such that the underfloor of a vehicle is not damaged by them.

According to an embodiment of the invention the control device is configured to instruct the driver of the vehicle to follow the calculated trajectory.

After calculating the trajectory for overcoming the bump without that the bump touches the underfloor of the vehicle, the control device can instruct the driver to follow the calculated trajectory. The control device may display the trajectory into a display like a head up display or a screen of a navigation system. For controlling if the driver follows the trajectory in a correct way, the control device may acquire information, such as yaw angle and steering angle of the vehicle.

According to an embodiment of the invention the control device is configured to automatically control the vehicle to follow the calculated trajectory.

The control device may also be capable to directly control the vehicle, such that the vehicle itself follows the calculated trajectory. This can lead into a more comfortable driving experience for the passengers of the vehicle. Furthermore, the detected bumps can be stored into a map of the navigation system. By saving the detected bumps into a map, the driver assistance system may learn over time and may share the collected information with other vehicles. This can be advantageous, if the sensor arrangement cannot operate due to environmental conditions, but the driving assistance system is still operable. Furthermore, the routing may be planned without or with fewer bumps on the way.

According to a second aspect of the invention a vehicle comprising a driving assistance system is provided.

The vehicle may, for example, be a motor vehicle, such as a car, bus or truck.

According to a third aspect, there is provided a method for overcoming a road bump comprising the following steps:
- Acquiring geometrical information of a bump on a road;
- Calculating a trajectory of a vehicle, such that a first front wheel of the vehicle touches the bump before a second front wheel of the vehicle touches the bump, such that a bottom of the vehicle does not touch the bump, when the vehicle moves over the bump;
- Instructing a driver of the vehicle or the vehicle to follow to the calculated trajectory.

According to another aspect, there is provided a computer program element for controlling the driver assistance system as previously described which, in the computer program element is executed by a processing unit, is adapted to perform the method steps as previously described.

There is also provided a computer readable medium having stored the computer element as previously described.

Advantageously, the benefits provided by any of the above aspects equally apply to all of the other aspects and vice versa.
The above aspects and examples will become apparent from and be elucidated with reference to the embodiments described hereinafter.

Exemplary embodiments will be described in the following with reference to the following drawings:
Fig. 1 shows a schematic set up of a vehicle including the driver assistance system and a bump on the road according to an embodiment of the invention.
Fig. 2 shows a schematic set up of the trajectory calculated by the driver assistance system to avoid that the underfloor of the vehicle touches the bump.
Fig. 3 shows a flow chart of a method for overcoming a bump, without that the underfloor of the vehicle touches the bump.

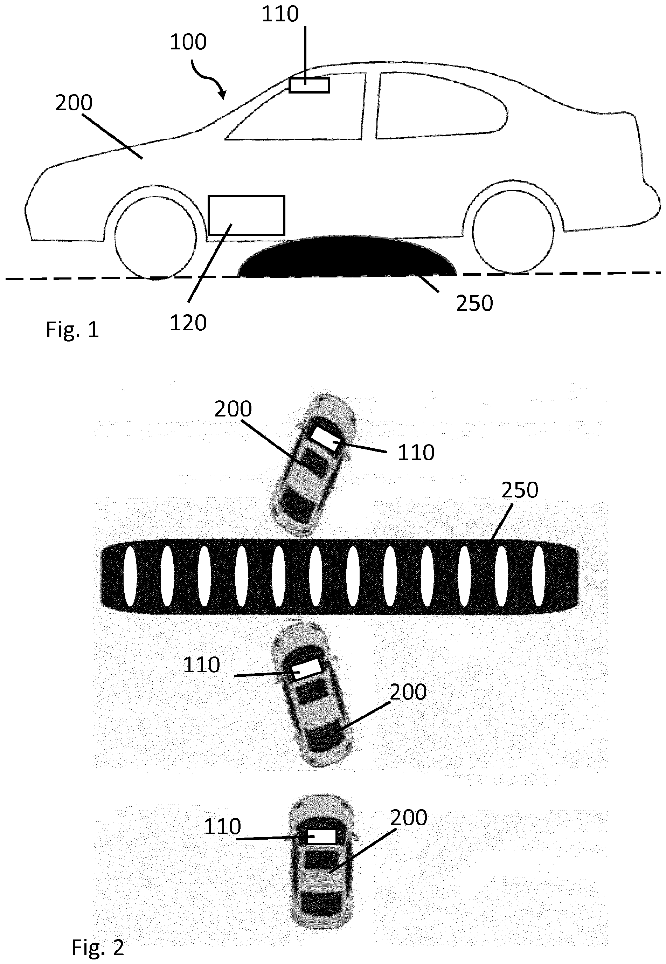

In Fig. 1 a vehicle 200 with a driver assistance system 100 for avoiding that the underfloor of the vehicle 200 touches a bump 250 is shown. The driver assistance system 100 comprises a sensor arrangement 110 and a control device 120. In Fig. 1 the driver assistance system 100 is deactivated, so that the problem can be seen. A bump 250 is on a road and if the vehicle 200 drives over the bump 250, the bump 250 can touch the underfloor of the vehicle 200. Driving over a bump 250, which is too high can cause damages to the underfloor of the vehicle 200. Further, the comfort of the passengers of the vehicle 200 may be negatively affected. In the shown case of Fig. 1, the bump 250 is a hump, but also a pothole can cause similar damages to the vehicle 200. The sensor arrangement 110 may comprise a camera for detecting the bump 250 on the road in front of the vehicle 200. For the detection of the bump 250 also other sensors such as Laser scanners, ultrasonic sensors and / or stereo cameras are provided. The control device 120 is configured to acquire geometrical information about the detected bump 250, based on the data of the sensor arrangement. According to these acquired geometrical information, the control device 120 can decide in which way the bump 250 can be overcome by the vehicle 200.

In this case the control device 120 can
- slow the vehicle 200 down and driving over the bump 250 in a straight way;
- slow the vehicle 200 down and calculate a trajectory for the vehicle 200, such that a first front wheel of the vehicle 200 touches the bump 250 before a second front wheel of the vehicle 200 touches the bump 250;
- slow the vehicle 200 down and calculate a trajectory for the vehicle 200, such that a first front wheel of the vehicle 200 touches the bump 250 before a second front wheel of the vehicle 200 touches the bump 250, and wherein a first rear wheel, located at the same side of the vehicle 200 as the first front wheel, leaves the bump 250 as the last wheel (turn on the bump); or
- slow the vehicle 200 down and calculate a trajectory for the vehicle 200, such that the trajectory leads the vehicle 200 around the bump 250, if the control device 120 determines from the analysis of the geometrical information of the bump 250, that the bump 250 is too high for the vehicle 200 to move over it without the underfloor of the vehicle 200 is touching it.

The control device 120 is configured to instruct the driver of the vehicle 200 to follow the calculated trajectory. Further, the control device 120 can instruct the vehicle 200 directly to follow the calculated trajectory. Especially if the vehicle 200 comprises automated driving functions. Thus, the comfort of the passengers of the vehicle 200 can be further optimised.

Fig. 2 shows a schematic set up for the calculate trajectory for overcoming a bump 250 without that the bump 250 touches the underfloor of the vehicle 200. The sensor arrangement 110 of the vehicle acquires geometrical information of the bump 250 in front of the vehicle 200. Based on the acquired geometrical information of the bump 250, the control device 120 of the driver assistance system 100 calculates a trajectory for overcoming the bump 250 without the bump 250 touches the underfloor of the vehicle 200. In this particular case, the control device 120 calculates that the bump 250 can be overcome, if a first front wheel of the vehicle 200 touches the bump 250 before a second front wheel of the vehicle 200 touches the bump 250, and wherein a first rear wheel, located at the same side of the vehicle 200 as the first front wheel, leaves the bump 250 as the last wheel. In the embodiment shown in Fig. 2 the first front wheel is the right wheel of the vehicle 200, the second front wheel is the left wheel of the vehicle 200 and the first rear wheel is the right rear wheel of the vehicle 200. In other words, the trajectory of the vehicle 200 is angular in an angle smaller than 90° in view of the bump 250. Further, the vehicle 200 may change the direction while driving over the bump 250. Thus, the vehicle 200 turns while overcoming the bump 250. By applying this trajectory, the bump 250 can be overcome that would otherwise touch the underfloor of the vehicle 200. After the vehicle 200 has passed the bump 250, the vehicle 200 can resume the normal driving.

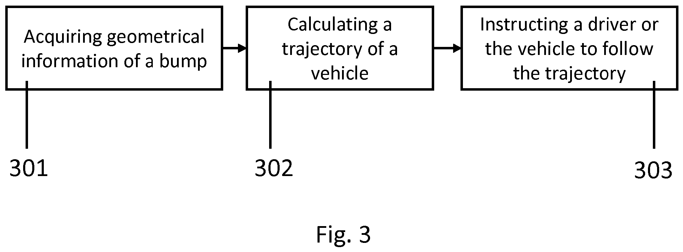

Fig. 3 shows a flow chart of the method for overcoming a bump with a vehicle. In step 301 geometrical information of the bump are acquired by a sensor arrangement. Followed by an analysis of the acquired geometrical information. In step 302 a trajectory of the vehicle for overcoming the bump is calculated by a control device.

In step 303 a driver of the vehicle or the vehicle itself is instructed by the control device to follow the calculated trajectory.

## Claims

1. Driver assistance system (100) for a vehicle (200), comprising:
a sensor arrangement (110) configured to acquire geometrical information of a bump (250) on a road,
a control device (120) configured to calculate, based on an analysis of the geometrical information of the bump (250), a trajectory for the vehicle (200), such that a first front wheel of the vehicle (200) touches the bump (250) before a second front wheel of the vehicle (200) touches the bump (250), such that an underfloor of the vehicle (200) does not touch the bump (250), when the vehicle (250) moves over the bump (250).

2. Driver assistance system (100) according to claim 1,
wherein the control device (120) is configured to calculate the trajectory for the vehicle (200), based on the analysis of the geometrical information of the bump (250), such that a first rear wheel, located at the same side of the vehicle (200) as the first front wheel, leaves the bump (250) as the last wheel.

3. Driver assistance system (100) according any one of the preceding claims,
wherein the control device (120) is configured to calculate the trajectory for the vehicle (200), such that the trajectory of the vehicle (200) leads the vehicle (200) around the bump (250), if the control device (120) determines from the analysis of the geometrical information of the bump (250), that the bump (250) is too high for the vehicle (200) to move over it without the underfloor of the vehicle (200) touching it.

4. Driver assistance system (100) according any one of the preceding claims,
wherein the control device (120) is configured to slow the vehicle (200) down, such that the vehicle (200) moves over the bump (250) without the underfloor of the vehicle (200) touching the bump (250).

5. Driver assistance system (100) according any one of the preceding claims,
wherein the sensor arrangement (110) comprises a camera.

6. Driver assistance system (100) according any one of the preceding claims,
wherein the road bump (250) is a hump.

7. Driver assistance system (100) according any one of the preceding claims,
wherein the road bump (250) is a recess.

8. Driver assistance system (100) according any one of the preceding claims,
wherein the control device is configured to instruct a driver of the vehicle to follow the calculated trajectory.

9. Driver assistance system (100) according any one of the preceding claims,
wherein the control device is configured to automatically control the vehicle to follow the calculated trajectory.

10. Vehicle (200) comprising a driver assistance system (100) according to any one of the preceding claims.

11. Method for overcoming a road bump comprising following steps:
- Acquiring (301) geometrical information of a bump on a road;
- Calculating (302) a trajectory of a vehicle based on the geometrical information of the bump, such that a first front wheel of the vehicle touches the bump before a second front wheel of the vehicle touches the bump, such that a bottom of the vehicle does not touch the bump, when the vehicle moves over the bump;
- Instructing (303) a driver of the vehicle or the vehicle to follow to the calculated trajectory.

12. Computer program element for controlling a driver assistance system according to any one of claims 1 to 9 and/or a vehicle according to claim 10, which when executed by a processor causes the driver assistance system to carry out the method according to claim 11.

13. Computer readable medium, on which a computer program element according to claim 12 is stored.
